# EUROPEAN PATENT APPLICATION

(11) **EP 2 708 309 A2**
(43) Date of publication of application: **19.03.2014**
(21) Application number: 12782661.8
(22) Date of filing: 20.06.2012
(51) Int. Cl.: B23K 26/38, G05B 19/12, B23K 37/02

(54) **LASER CUTTING MACHINE AND MACHINE-READABLE MEDIUM**

(30) Priority: 10.05.2011 RU 2011118215
(71) Applicant: Korukov, Alexey Nikolaevich, Moscow 119021 (RU)
(72) Inventor: KORUKOV, Alexey Nikolaevich, Moscow 119021 (RU); NAUMOV, Nikolay Oktyabrievich, Kaluga 248017 (RU)
(74) Representative: Keilitz, Wolfgang
(86) International application number: PCT/RU2012/000480
(87) International publication number: WO 2012/154086

(57) **Abstract**

This invention relates to laser cutting of materials, including metals. Usage of this invention allows for enhancing functionality by means of ensuring a possibility for independent operation of two or more laser heads at one machine. The machine comprises: a support 1, at least one longitudinal slide 2, at least two transversal slides 3, at least two laser heads 4, and a computing means. Each transversal slide 3 is mounted on the longitudinal slide 2 with a possibility for independent vertical movement, and each laser head 4 is mounted on the transversal slide 3 with a possibility for independent horizontal and vertical movement. Drives of the transversal slides and laser heads are connected to the computing means which is configured for an independent program controlling each of those drives. As a result, in the case of two laser heads, the machine ensures for six-axis controlling both laser heads.

## Description

### Field of the Invention

This invention relates to laser cutting of materials, including metals, and particularly to a machine for laser cutting of materials and to a computer-readable medium with a program for controlling such a machine.

### Background of the Invention

At present, the laser cutting of materials including sheet materials has found a wide industrial use. Meanwhile, for accelerating a laser cutting process, machines with two laser heads moving synchronously at both sides of material being cut are applied. For that purpose, one laser source can be used, which beam is divided by respective mirrors (see, for example, US Patent 6576870, publ. 06.10.2003), or two separate laser sources (see, for example, RU Patent 2139782**,** publ. 10.20.1999; US Patent 6313433**,** publ. 11.06.2001; CN Utility Model Patents 2661357**,** publ. 12.08.2004, 201257862**,** publ. 06.17.2009, and 201338160 and 201338162**,** both publ. 11.04.2009). Such a construction allows for increasing a cutting speed, especially in the case of comparatively thick materials, but herewith requires an exact alignment of beams in the vertical and a synchronous movement of the both laser heads.

Also known is a machine for laser cutting of materials, wherein two laser beams move one after another for accelerating a laser cutting process or for forming an intricate cut profile (see US Patent Application 2010/0044353**,** publ. 02.25.2010). Known also is a machine, wherein both heads move synchronously in the same direction with a possibility for adjusting a distance therebetween, which allows for manufacturing simultaneously two identical details at once (see CN Patent Application 101036959**,** publ. 09.19.2007). However, in this case, a rigid constraint of the laser heads restricts machine functionality.

### Summary of the Invention

The purpose of the present invention consists in functionality enhancement by means of ensuring a possibility for independent operation of two or more laser heads at one machine.

In order for achieving that purpose, the first aspect of the present invention provides a machine for laser cutting of materials, which machine comprising: a support; at least one longitudinal slide, each of which longitudinal slides being mounted on the support; at least two transversal slides, each of which transversal slides being mounted on the at least one of the longitudinal slides and being movable independently along this longitudinal slide by means of respective drive for moving longitudinally the transversal slide; at least two laser heads, at least one of the laser heads being mounted on each of the transversal slides and being movable independently along this transversal slide by means of respective drive for moving horizontally and respective drive for moving vertically; a computing means; wherein all drives for moving laser head horizontally, all drives of moving laser head vertically, and all drives for moving transversal slide being connected to the computing means which is configured for an independent program controlling each of the drives for moving laser head horizontally, drives of moving laser head vertically, and drives for moving transversal slide.

A feature of the machine in accordance to the present invention consists in that each of the drives for moving transversal slide, drives for moving laser head horizontally, and drives for moving laser head vertically can be made in the form of linear electric motor mounted along the respective slide, or in the form of electric motor having a gear wheel meant for engaging a toothed bar mounted along the respective slide.

One more feature of the machine in accordance to the present invention consists in that, in the case of one longitudinal slide and two transversal slides each having one laser head, the computing means being configured for six-axis controlling both laser heads.

In order for achieving the same purpose, the second aspect of the present invention provides a computer-readable medium intended for a direct participation in operating the computing means of the above machine and comprising a program which ensures, when executing in the above computing means, an independent controlling each of the drives for moving laser head horizontally, drives of moving laser head vertically, and drives for moving transversal slide.

Herewith, in the case when the machine comprises one longitudinal slide and two transversal slides each having one laser head, the indicated program, when executing in said computing means, can ensure for six-axis controlling both laser heads.

### Brief Description of the Drawings

The invention is illustrated by drawings in which the identical elements are indicated by the same reference numbers.
Fig. 1 shows a perspective view of embodiment of the machine for laser cutting of materials in accordance with the present invention.
Fig. 2 shows a front elevation view of the machine in Fig. 1.
Fig. 3 shows separate components of the machine in Fig. 1.

### Detailed Description of Embodiments of the Invention

The present invention can be implemented, for example, in the form of a machine for laser cutting of materials, which machine is shown in the accompanying drawings.

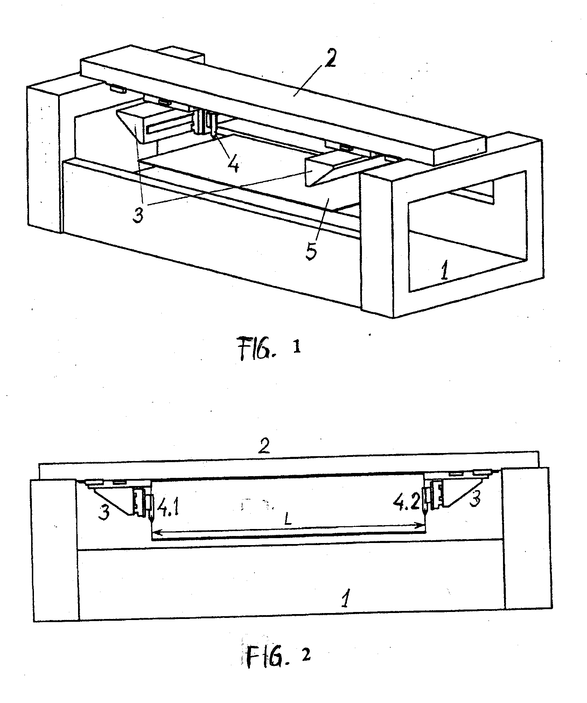

As is clear from Fig. 1, the machine for laser cutting of materials in accordance with this embodiment has a support 1, on which a longitudinal slide 2 is mounted rigidly. It should be noted that the embodiment of the machine in accordance with the present invention shown in the drawings is an illustrative only rather than limiting. Particularly, there could be, for example, two longitudinal slides which are mounted in parallel to one another. The name for those slides is chosen in order for emphasizing their extension along the support 1 which has usually an elongate form.

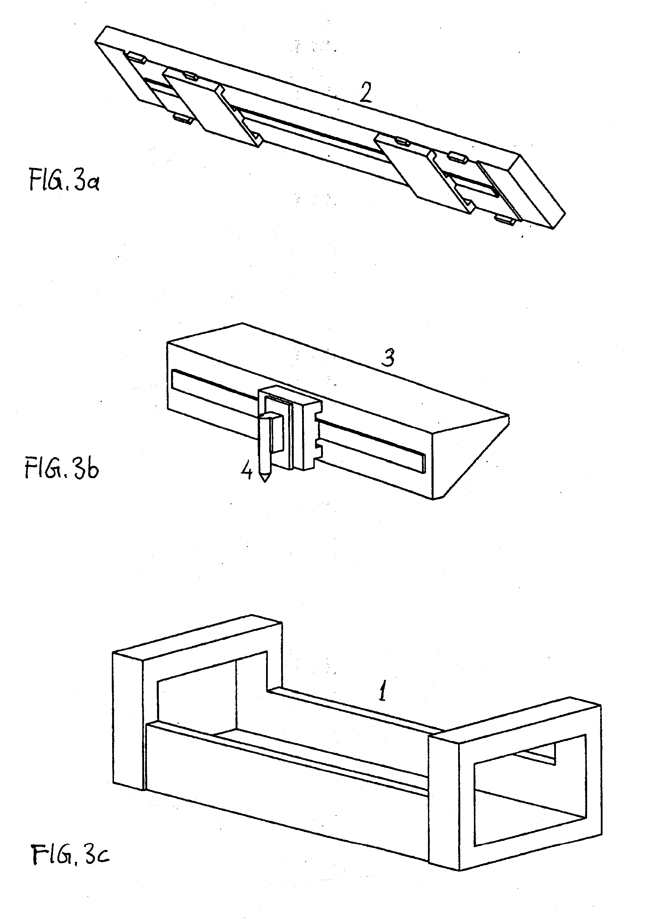

As can be seen from Figs. 1 to 3, transversal slides 3 are mounted on the longitudinal slide 2. The drawings show two transversal slides 3, but there can be other number thereof. For instance, three transversal slides 3 can be mounted on one longitudinal slide 2. Each of the transversal slides 3 is mounted on the respective longitudinal slide 2 movable independently along this longitudinal slide 2. Such movement is achieved by means of respective drive for moving longitudinally the transversal slide (not shown), which drive could be performed in any known way. For example, this drive for moving longitudinally the transversal slide can be an ordinary electric motor with a gear wheel fixed on the output shaft thereof. In this case, a mating toothed bar is fastened along the respective longitudinal slide 2, and the indicated gear wheel is meant for engaging that toothed bar. In other case, the drive for moving longitudinally the transversal slide can be a linear electric motor mounted along the respective longitudinal slide 2.

In the drawings, both shown transversal slides 3 are mounted so that each of the drives for moving longitudinally the transversal slide is assumed to be arranged from the bottom side of the longitudinal slide 2 (see Fig, 3b). This is, however, not a required condition. For example, if the transversal slide 3 is made with a buckle clasping the longitudinal slide 2, then the drive for moving longitudinally the transversal slide could be arranged from the top side of the longitudinal slide 2. A specific implementation of the suspension arrangement of the longitudinal slide 2 and arrangement of the drive for moving longitudinally the transversal slide is defined by a location, as well as by design features of the machine, serviceability thereof, etc.

As is seen from the drawings, each transversal slide 3 has a laser head 4 mounted independently movable along this transversal slide 3. Such movement is achieved by means of respective drive for moving horizontally and respective drive for moving vertically (not shown), each of which drives can be performed in any known way, for example, in the same manner as described above the drive for moving longitudinally the transversal slide. Just the possibility for horizontal movement of the laser head 4 along the transversal slide 3 has defined the selection of the name for the latter, because such a movement occurs in transverse direction of the longitudinal slide 2.

It should be noted that two or more laser heads 4 can be mounted on one transversal slide 3, each laser head 4 having a respective drive for moving horizontally and a respective drive for moving vertically. For example, two laser heads 4 can be arranged on opposite branches of one transversal slide 3.

As is seen from Fig. 2, the transversal slides 3 can be situated in such a position from one another that the corresponding laser heads 4 are arranged within the maximal spacing L in the longitudinal direction. As a rule, that distance L for the sheet material cutting machines coincide (or even exceeds slightly) a longitudinal size of the sheet 5 of material being cut.

Other elements of the machine in accordance with the present invention are not shown in the drawings in order for not darkening the drawings and complicating the description. Of course, the machine in accordance with the present invention comprises all components necessary for performing the material cutting, for example, the sheet material 5 shown in Fig. 1. All such components not shown can be performed, for example, in accordance with the RU Utility Model Patent 86129 (publ. 08.27.2009). Particularly, the laser head 4 can be the same with the laser head disclosed in the RU Patent 2266802 (publ. 12.27.2006).

Usage of several (at least two) laser heads 4 each moving along the respective transversal slide 3 allows not barely accelerate the cutting process but ensures a possibility for cutting simultaneously several various details or holes from one sheet 5 or several sheets. In order for realizing such possibility, each laser head must move along its own trajectory (in three dimensions), which is served by both its own drives for moving horizontally and vertically and the drive for moving longitudinally the transversal slide of the respective transversal slide 3. These drives are controlled using a respective computing means (not shown), for example, a numerical control apparatus or a programmable controller, processor, computer, etc. Herewith, all drives for moving laser head horizontally and all drives for moving laser head vertically for each of the laser heads 4, and all drives for moving longitudinally the transversal slide for each of the transversal slides 3 are connected to that computing means which is configured for independent program controlling each of the drives for moving laser head horizontally, drives of moving laser head vertically, and drives for moving transversal slide for performing simultaneously several (at least two) separate cuts.

Particularly, when the machine comprises one longitudinal slide and two transversal slides each having one laser head, the indicated program can, when executing in said computing means, ensure for six-axis controlling both laser heads, i.e., for three-axis controlling each laser head 4.

In order for operating (programming) such computing means, a computer-readable medium can be used, which computer-readable medium being intended for a direct participation in operating that computing means and comprising a program which ensures, when executing in said computing means, an independent controlling each of said drives. A specific form of the program used for this purpose is defined by both a required cutting trajectory and a utilized programming language.

Program controlling devices solving such problems are known, for example, from the aforementioned RU Utility Model Patent 86129**.** However, all known controlling complexes, as well as all known machines for laser cutting are intended for cutting only one detail or one hole, while the machine in accordance with the present invention enables for operating two or more laser heads on the same machine independently from one another. This increases sharply the processing speed and/or permits for obtaining details (holes) of various forms, which enhances the machine functionality.

The operation of the machine in accordance with the present invention is evident from the above description. The material sheet 5 is laid onto the support 1. A respective program is entered into the computing means, in which program all lines of required cuts are taken into account in order for the transversal slides 3 and laser heads 4 never collide when moving during the working process. The movements in parallel the plane of the sheet 5 (i.e., in two dimensions) are carried out by the drives for moving longitudinally the transversal slide and drives for moving laser head horizontally.

For example, if it is necessary to cut a door with a small window from the sheet 5, then the program controlling the cutting process can be written so that, primarily, one (say, the left in Figs. 1 and 2) laser head 4.1 cuts the top edge of the door and then proceeds to cut one of side edges. At the same time, the second (right in Figs. 1 and 2) laser head 4.2 cuts, at first, the small window beginning with the top edge thereof and then, upon completion cutting the small window, the second (right) laser head 4.2 begins to cut the side edge (not the side edge being already cut by the first laser head 4.1) approximately from its midpoint and then proceeds to cut the door bottom edge. At that time, the first laser head 4.1 ceases to cut its side edge, moves to another side edge to the point where the second (right) laser head 4.2 has begun the cutting, and cuts that side edge entirely in the direction to the door top edge just cut. The second laser head 4.2, upon completion cutting the door bottom edge, proceeds to cut the side edge which remains not cut due to the movement of the first laser head 4.1, and completes the cutting of that side edge. As a result, both transversal slides 3 do not collide during the operation, and the time of the cutting shortens more than twice taking into account that, when cutting on a conventional machine with one laser head, some downtime is required for moving the laser head from one cut to another one. And in the machine in accordance with the present invention, when one transversal slide 3 with the corresponding laser head 4 moves, another laser head 4 can continue to cut the sheet 5.

Of course, if it is necessary for cutting the material non-through, any laser head 4 can move vertically (i.e., in the third dimension) using the respective drive for moving laser head vertically.

Thus the presented embodiment performs the simultaneous six-axis control of two laser heads, which ensures exactly the enhancement of the machine functionality, as well as the acceleration of the cutting process.

As was already noted, the presented description together with the drawings is not intended for limiting the present invention by the disclosed embodiments. The scope of the present invention is defined by the appended claims taking into account equivalents of features included into the independent claim.

## Claims

1. A machine for laser cutting of materials, which machine comprising:
- a support;
- at least one longitudinal slide, each of which longitudinal slides being mounted on the support;
- at least two transversal slides, each of which transversal slides being mounted on the at least one of the longitudinal slides and being movable independently along this longitudinal slide by means of respective drive for moving longitudinally the transversal slide;
- at least two laser heads, at least one of the laser heads being mounted on each of the transversal slides and being movable independently along this transversal slide by means of respective drive for moving horizontally and respective drive for moving vertically;
- a computing means;
- wherein all drives for moving laser head horizontally, all drives of moving laser head vertically, and all drives for moving transversal slide being connected to the computing means which is configured for an independent program controlling each of the drives for moving laser head horizontally, drives of moving laser head vertically, and drives for moving transversal slide.

2. The machine of claim 1, wherein each of the drives for moving transversal slide, drives for moving laser head horizontally, and drives for moving laser head vertically is made in the form of linear electric motor mounted along the respective slide.

3. The machine of claim 1, wherein each of the drives for moving transversal slide, drives for moving laser head horizontally, and drives for moving laser head vertically is made in the form of electric motor having a gear wheel meant for engaging a toothed bar mounted along the respective slide.

4. The machine of claim 1, wherein, in the case of one longitudinal slide and two transversal slides each having one laser head, the computing means being configured for six-axis controlling both laser heads.

5. A computer-readable medium intended for a direct participation in operating the computing means of the machine of claim 1 and comprising a program which ensures, when executing in the above computing means, an independent controlling each of the drives for moving laser head horizontally, each of the drives of moving laser head vertically, and each of the drives for moving transversal slide.

6. The computer-readable medium of claim 5, wherein, in the case of performing the machine in accordance with claim 4, said program, when executing in said computing means, ensures for six-axis controlling both laser heads.
